# EUROPÄISCHE PATENTANMELDUNG

(11) **EP 1 253 001 A2**
(43) Veröffentlichungstag der Anmeldung: **30.10.2002**
(21) Anmeldenummer: 02005257.7
(22) Anmeldetag: 11.03.2002
(51) Int. Cl.: B29C 65/16

(54) **Vorrichtung zum Verschweissen von einen Hohlkörper bildenden thermoplastischen Kunststoffteilen mittels Laserstrahlung**

(30) Priorität: 23.04.2001 DE 10120351
(71) Anmelder: JENOPTIK Automatisierungstechnik GmbH, 07745 Jena (DE)
(72) Erfinder: Zühlke, Hans-Ulrich, 07743 Jena (DE); Eberhardt, Gabriele, 07749 Jena (DE); Preuss, Norbert, 07743 Jena (DE); Griebel, Martin, 07743 Jena (DE); Weisser, Jürgen, 07743 Jena (DE)
(74) Vertreter: Schaller, Renate

(57) **Zusammenfassung**

Vorrichtung zum Verschweißen von mehreren einen Hohlkörper mit einer Öffnung bildenden thermoplastischen Kunststoffteilen (Fügeteilen) mittels Laser mit einem Vakuumhalter (1), der eine mit einer Vakuumpumpe (4) in Verbindung stehende, einseitig offene Vakuumkammer (2) aufweist, die gemeinsam mit dem Hohlkörper eine geschlossene evakuierbare Kammer bildet und der bei Anliegen eines Unterdruckes den Hohlkörper ortsfest hält, die Fügeteile zusammenhält und eine Prüfung der Dichtheit der Schweißnaht ermöglicht.

## Beschreibung

Die Erfindung betrifft eine Vorrichtung zum Verschweißen von einen Hohlkörper bildenden thermoplastischen Kunststoffteilen mittels Laserstrahlung, wie sie gattungsgemäß aus der JP 11348132 bekannt ist.

Thermoplastische Kunststoffteile (Fügeteile) können nach unterschiedlichen Schweißverfahren miteinander verbunden werden, bei denen für das Aufschmelzen der Fügeteile verschiedene Energiearten verwendet werden, so auch die Laserstrahlung.

In der DE 19510493 ist ein thermoplastisches Gehäuse und ein Verfahren zum Verschweißen von thermoplastischen Gehäuseteilen mittels Laser beschrieben. Der Grundgedanke besteht hier darin, dass die beiden zu verschweißenden Gehäuseteile zumindest im Bereich der Fügezone (gesamter Bereich in dem eine Schmelze ausgebildet wird) zum einen aus einem für die Laserstrahlung weitestgehend transparenten Material und zum anderen aus einem die Laserstrahlung weitestgehend absorbierenden Material besteht und die Laserstrahlung so auf das Gehäuse gerichtet wird, dass sie zuerst das für die Laserstrahlung transparente Material durchdringt und anschließend auf das die Laserstrahlung absorbierende Material auftrifft.
Dadurch, dass die für die Herstellung der Schweißverbindung notwendige Energie über eines der Fügeteile zur Fügezone gelangen kann, ergibt sich die Möglichkeit, die Schweißnahtführung im Gehäuse frei anzuordnen, d. h. die Schweißnaht muss nicht in einer Ebene, sondern kann auch dreidimensional oder im Inneren des Gehäuses verlaufen. Dies ermöglicht grundsätzlich gegenüber anderen aus dem Stand der Technik bekannten Verfahren zum Verschweißen von thermoplastischen Gehäusen eine weit vielfältigere Möglichkeit der Formgestaltung der Gehäuseteile und auch der Formgestaltung der Fügezone. Darüber hinaus können auch Gehäuse mit großen Wandstärken verschweißt werden. Die Fügeteile können auf Stoß oder überlappend miteinander verbunden werden.
Die Güte einer so entstehenden Schweißnaht, die insbesondere eine dichte Verbindung zwischen den Fügeteilen sichern soll, jedoch auch zur Vermeidung von Nacharbeit ohne einen Schmelzaustrieb gebildet werden soll, wird im Stand der Technik durch unterschiedliche Maßnahmen beeinflusst. Dabei kann es sich um spezielle konstruktive Gestaltungen der Gehäuseteile im Bereich der Fügezone handeln, die die Formgebung der entstehenden Schmelze beeinflussen oder/und um die Erzeugung eines Schlusses (Kraft- oder Formschluss) zwischen den zu verbindenden Gehäuseteilen während des Schweißverfahrens, um einen definierten Fügespalt zu erreichen.
In der DE 195 10 493 ist geschrieben, dass sich die Güte der Schweißnaht durch Druckeinwirkung auf die Fügezone bis zum Erkalten steigern lässt. Dabei soll die Druckeinwirkung bevorzugt benachbart zum Fokus des Laserstrahles vorgenommen werden, so dass das Eindringen der Laserstrahlen in das Werkstück nicht behindert wird. Es wird auch der Gedanke geäußert, im Bereich des Laserstrahles transparente Spannmittel zu verwenden, um so die Druckeinwirkung direkt im Einwirkungsbereich der Laserstrahlen vornehmen zu können. Die Druckeinwirkung soll bevorzugt der Bewegung der Laserstrahlung entlang der Fügezone nachgeführt werden.
Die Erzeugung einer Krafteinwirkung, wie hier vorgeschlagen, hat einerseits den Nachteil, dass die Fügeteile so geformt sein müssen, dass im Bereich der Fügezone Spannmittel zur Anlage kommen können. Eine Nachführung der Spannmittel erfordert ein ständiges Feststellen und Lösen, was insbesondere einen zusätzlichen gerätetechnischen Aufwand erfordert. Außerdem ist die jeweilige Krafteinwirkung bei einer Nachführung der Spannmittel zeitlich sehr begrenzt, wenn die Dauer der Verfahrensdurchführung nicht dadurch erhöht werden soll.

In der DE 4432081 werden Vorrichtungen zum Fixieren der Fügeteile zum Schweißen mittels Strahlungsenergie wegen ihrer Aufwendigkeit als Nachteil kritisiert. Man stellt sich die Aufgabe, eine Lösung zu finden, bei der Kunststoffteile mit Hilfe von Strahlungsenergie ohne Vorrichtungen zur Fixierung der zu verbindenden Teile miteinander verschweißt werden können. Die Lösung soll darin bestehen, die Fügeteile durch Formschluss zueinander zu fixieren, insbesondere in Richtung der Kraftwirkung, entstehend mit der Ausbildung der Schmelze (Schmelzdruck), z.B. durch eine Einrastverbindung oder ein Gewinde. Es wird auch vorgeschlagen, die Fügeteile durch einen "inneren Kraftschluss, wie Verschraubungen oder Magnete" zueinander zu fixieren. Die Fixierung müsse man dann nur so dimensionieren, dass der örtlich entstehende Schweißdruck, der sich mit der Strahlführung entlang der Nahtkontur bewegt, aufgenommen wird.
Dies bedeutet jedoch in jedem Fall, spezielle konstruktive Maßnahmen an den beiden Fügeteilen treffen zu müssen. Selbst wenn das der Funktion und dem gewünschten Gestaltungsbild nicht entgegenstehen würde, bedeutet es zwangsläufig einen erhöhten Vorfertigungsaufwand und zusätzliche Materialkosten, z.B. für die genannten Magnete oder die Schraubverbindungen. Bei Großserien- und Massenfertigungen dürfte der erhöhte Mehraufwand den Aufwand für eine Vorrichtung zum Fixieren, die ständig wiederverwendbar ist, weit übersteigen.

Die DE 4225679 betrifft ein Verfahren und eine Vorrichtung zum Verschweißen eines Gehäuseoberteils und eines Gehäuseunterteils, wobei zwischen den zu verschweißenden Gehäuseteilen eine Filterscheibe eingebracht ist. Es sollen hier besonders hohe Anforderungen an die Maßtoleranz des Fügespaltes und an die Festigkeit der Fügenaht gestellt werden. Eine ständige Qualitätsüberwachung muss erfolgen. In der beschriebenen Vorrichtung sollen die zu verschweißenden Einzelteile aufeinander angeordnet werden und mit einer Anpressvorrichtung zusammengepresst werden, während ein Laserstrahl entlang der zu schweißenden Fügenaht geführt wird. Zur Anpressvorrichtung oder zu der mit ihr erzeugten Anpresskraft sind in der Beschreibung keine Ausführungen gemacht worden.

Aus der JP 11348132 ist ebenfalls ein Verfahren und eine Vorrichtung zum Laserschweißen bekannt. Auch hier sollen zwei einen Hohlkörper bildende Gehäuseteile miteinander mittels Laser verschweißt werden. Als Hohlkörper ist konkret eine Leuchte mit einem Reflektor als Gehäuseunterteil und einer Lichtscheibe als Gehäuseoberteil benannt. Der Reflektor ist über seinen Rand auf der Zylinderwand einer Halteeinrichtung aufliegend ortsfest lotrecht angeordnet. Eine auf der Lichtscheibe aufliegende Andruckeinrichtung drückt die Lichtscheibe fest auf den Rand des Reflektors auf. Die Halteeinrichtung und die Andruckeinrichtung erfüllen einerseits in Zusammenwirkung die Funktion der aus dem Stand der Technik bekannten Anpress- oder Spannvorrichtungen, indem sie die beiden Fügeteile an ihren die Fügezone bildenden Fügeflächen zusammendrücken, andererseits dient sie dem Halten und damit Positionieren des Gehäuses zum Laser, der zur Duchführung des Schweißprozesses entlang der Fügezone geführt wird. Gegenüber den aus dem Stand der Technik bekannten Lösungen zum Zusammendrücken der Fügeflächen zeichnet sich diese Lösung dadurch aus, das mit ihr zusätzlich das Gehäuse gehalten und positioniert wird.
Allerdings ist die aufgezeigte Vorrichtung in ihrer Anwendung bezüglich der Gestalt des Gehäuses und der Lage der Fügezone im Gehäuse eng begrenzt. Außerdem muss die Andruckeinrichtung in Ihrer Formgestaltung auf die Oberflächenform der Lichtscheibe angepasst sein.
Dass eine solche Vorrichtung über das Zusammendrücken der Fügeflächen und das Halten des Gehäuses hinaus weitere Funktionen erfüllt, ist aus dem Stand der Technik nicht bekannt.

Der Erfindung liegt die Aufgabe zugrunde, eine Vorrichtung zu schaffen, mit der ein aus mehreren Fügeteilen bestehender, mit einer Öffnung versehener Hohlkörper zwecks Verschweißung mittels Laserstrahlung ortsfest gehalten, zusammengehalten und auf Dichtheit der Schweißnaht geprüft werden kann. Die Vorrichtung soll einen gleichmäßigen Fügedruck in der Fügezone erzeugen und für eine Vielfalt von unterschiedlich geformten Hohlkörpern verwendbar sein.

Die erfindungsgemäße Aufgabe wird für eine Vorrichtung gemäß dem Oberbegriff des Anspruches 1 dadurch gelöst, dass die Einrichtung zum Halten und die Einrichtung zur Erzeugung einer Kraft ein einziger Vakuumhalter (1) ist, der eine mit einer Vakuumpumpe (4) in Verbindung stehende, einseitig offene Vakuumkammer (2) aufweist, die gemeinsam mit dem Hohlkörper eine geschlossene evakuierbare Kammer bildet.
Vorteilhafte Ausführungen der Erfindung sind in den Unteransprüchen aufgeführt.
Ein erfindungswesentlicher Gedanke besteht darin, dass durch das Verschließen einer einseitig offenen Vakuumkammer mit dem die Öffnung aufweisenden Fügeteil des Hohlkörpers alle Fügezonen zwischen den den Hohlkörper bildenden Fügeteilen, unabhängig von ihrer Lage und geometrischen Gestaltung, mit einem Fügedruck beaufschlagt, wenn die Vakuumkammer evakuiert wird.

Die Erfindung soll nachfolgend an Hand von Ausführungsbeispielen und Zeichnungen näher erläutert werden. In den Zeichnungen zeigen:
- Fig.1: eine schematische Darstellung einer erfindungsgemäßen Vorrichtung mit einer ersten Ausführung des Vakuumhalters mit einem ersten eingesetzten Gehäuse
- Fig. 2: eine schematische Darstellung einer zweiten Ausführung des Vakuumhalters mit einem zweiten eingesetzten Gehäuse

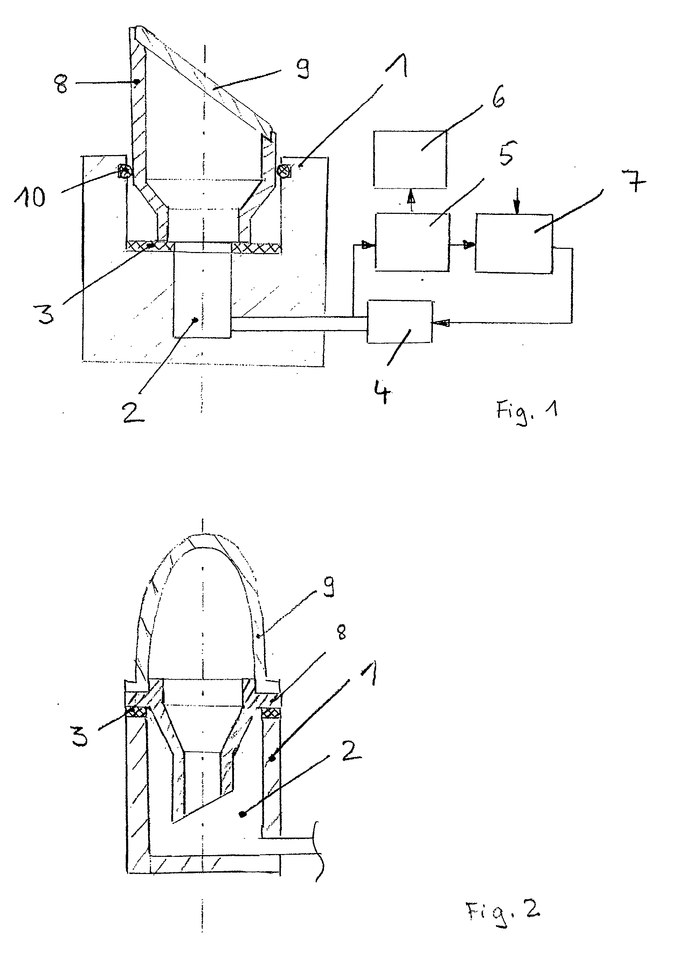

Die in Fig. 1 dargestellte Vorrichtung besteht im Wesentlichen aus einem Vakuumhalter 1 mit einer Vakuumkammer 2 und einer Abdichtscheibe 3, sowie einer mit der Vakuumkammer 2 verbundenen Vakuumpumpe 4, einem Drucksensor 5, einer signalgebenden Einheit 6 und einer Steuereinheit 7. Die Vorrichtung dient dem Halten eines aus mehreren Fügeteilen zusammengesetzten Hohlkörpers, dem Zusammenpressen der Fügeflächen und dem Prüfen der Dichtheit der zwischen den Fügeflächen erzeugten Schweißnaht.
Die konkrete konstruktive Gestaltung des Vakuumhalters 1 kann in Abhängigkeit von der Form des zu haltenden Hohlkörpers variieren. Bei der in Fig. 1 dargestellten Ausführung soll ein Lampengehäuse gehalten werden, bestehend aus einem Reflektor 8, der das untere Fügeteil und einer Lichtscheibe 9, die das obere Fügeteil darstellt. Der Reflektor 8 ist an dem der Lichtscheibe 9 abgewandten Ende rotationssymmetrisch ausgebildet, mit einer Öffnung um seine Symmetrieachse. Bei der die Öffnung umschließenden Abschlussfläche handelt es sich um eine radiale Planfläche. Mit dieser Planfläche wird der Reflektor 8 auf die, auf der Vakuumkammer 2 aufliegende Abdichtscheibe 3 aufgesetzt. Die Vakuumkammer 2 ist in jedem Fall eine einseitig offene Kammer und bildet erst nach dem Einsetzen des gesamten Hohlkörpers in den Vakuumhalter 1 mit diesem gemeinsam eine geschlossene Kammer, die evakuierbar ist. Beim Aufsetzen des Reflektors 8 auf die Abdichtscheibe 3 wird dieser über seine Umfangsfläche in einem O-Ring 10 so geführt, dass die Öffnung des Reflektors die offene Seite der Vakuumkammer vollständig einschließt. Bei dem in Fig. 1 dargestellten Lampengehäuse sind die beiden Fügeteile bis auf eine noch freie translatorische Bewegungsrichtung formschlüssig miteinander verbunden. Der Formschluss stellt hier lediglich eine Montagehilfe dar und verdeckt die Fügezone nach außen. Eine Haltefunktion hat dieser Formschluss nach Anlegen des Unterdrucks in der Vakuumkammer 2 nicht mehr. Mit der Erzeugung eines Unterdrucks wird die Lichtscheibe 9 mit ihrer Fügefläche an die Fügefläche des Reflektors 8 mit einer Kraft proportional dem Unterdruck gepresst und presst damit auch den Reflektor 8 selbst mit seiner Planfläche um die Öffnung auf die Abdichtscheibe 3. Mit keinen der in der Beschreibung des Standes der Technik bekannten Spannmitteln ist es möglich, einen so gleichmäßigen und einfach steuerbaren Fügedruck zu erzeugen, ohne dabei den freien Zugang der Fügezone für das Schweißwerkzeug zu beeinträchtigen. Ein die Laserstrahlung auf die Fügezone richtender Werkzeugkopf (nicht dargestellt) kann aus den verschiedensten Richtungen von axial bis hin zu radial auf die Fügezone gerichtet werden. Dadurch kann die Fügezone eine nahezu willkürliche Lage am Hohlkörper einnehmen. Es können mit diesem Vakuumhalter 1 auch Hohlkörper zum Laserschweißen gehalten werden, die aus mehr als zwei Fügeteilen bestehen. Bezogen auf das hier gewählte Beispiel eines Lampengehäuses könnte es z.B. von Interesse sein, die Lichtscheibe aus mehreren Segmenten zusammenzusetzen und mit dem Reflektor zu verbinden. Grundsätzlich ist die Form der einzelnen Fügeteile nicht von Bedeutung, sie müssen nur gemeinsam einen Hohlkörper mit einer Öffnung bilden.
Es soll nun die Funktionsweise der in Fig. 1 dargestellten Vorrichtung erläutert werden.
Nachdem der Reflektor 8 auf die Vakuumkammer 2 aufgesetzt und die Lichtscheibe 9 auf den Reflektor 8 gefügt wurde (natürlich können die Teile auch zuvor zusammengefügt werden) und ein Unterdruck geeigneter Höhe erzeugt wurde, beginnt das Laserschweißverfahren. Gleich herkömmlichen Verfahren und Vorrichtungen wird die Laserstrahlung entlang der Fügezone geführt. Nach Beendigung des Schweißprozesses wird der Unterdruck noch eine Weile aufrechterhalten, um so zu prüfen, ob die Schweißnaht auch dicht ist. Damit wird die erfindungsgemäße Vorrichtung ihrer dritten Funktion gerecht. Über einen Drucksensor 5 wird der Unterdruck kontrolliert. Der Drucksensor 5 ist in dem anhand Fig. 1 beschriebenen Ausführungsbeispiel mit einer signalgebenden Einheit 6 und einer Steuereinheit 7 verbunden. Die signalgebende Einheit 6 kann z.B. eine bildsignalgebende Einheit, nämlich ein Monitor sein, an dem der Druckanstieg- und -abfall grafisch dargestellt wird. Sie kann auch ein akustisches Signal abgeben, z.B. bei einem zu schnellen Druckanstieg, der auf eine undichte Schweißnaht zurückzuführen ist. Es könnte aber auch ein Drucker sein, der zum Nachweis der 100%igen Qualitätskontrolle die Prüfergebnisse dokumentiert. Die Weiterleitung der Messergebnisse des Drucksensors 5 an die Steuereinheit 7, die mit der Vakuumpumpe 4 verbunden ist, ermöglicht eine Regelung der Unterdruckerzeugung in Abhängigkeit vom Druckanstieg, insbesondere während des Schweißverfahrens, um einen konstanten Fügedruck zu sichern. Selbstverständlich kann mittels der Steuereinheit statt eines konstanten Fügedrucks während des Schweißverfahrens auch ein bestimmter Druckverlauf realisiert werden In Fig. 2 ist eine zweite Ausführung eines Vakuumhalters dargestellt. Sie dient ebenfalls der Aufnahme eines Lampengehäuses, bestehend aus einem Reflektor 8 und einer Lichtscheibe 9. Der Reflektor 8 ist auch hier weitestgehend ein rotationssymmetrisches Teil mit einer Öffnung um die Symmetrieachse. Die die Öffnung begrenzende Fläche befindet sich hier allerdings nicht in einer radialen Ebene, sondern in einer zur Symmetrieachse geneigten Ebene. Diese Fläche ist daher nicht besonders gut geeignet als Dichtfläche unmittelbar oder mittelbar über einer Abdichtscheibe 3 zu wirken. Für die Abdichtung muss daher eine andere umlaufende Fläche des Hohlkörpers gefunden werden. Hier bietet sich an dem Reflektor 8 ein Bund an, der auf die Abdichtscheibe 3 aufgelegt wird. Der Bund bietet auch gleichzeitig die zur Herstellung der Schweißverbindung mit der Lichtscheibe 9 notwendige Fügefläche.
Die im ersten Ausführungsbeispiel genannte signalgebende Einheit 6 ist nicht notwendig, wenn mit der Vorrichtung keine Dichtheitsprüfung durchgeführt werden soll. Grundsätzlich ist die Verwendung der Vorrichtung nicht beschränkt auf die Anwendung des Laserschweißens. Sie ist hier jedoch besonders vorteilhaft einsetzbar, da die Möglichkeiten der Führung des Werkzeugkopfes zum Gehäuse völlig unbeeinflusst bleiben und somit die Vorzüge des Laserschweißens voll ausgeschöpft werden können.

### Aufstellung der verwendeten Bezugszeichen

- 1: Vakuumhalter
- 2: Vakuumkammer
- 3: Abdichtscheibe
- 4: Vakuumpumpe
- 5: Drucksensor
- 6: Signalgebende Einheit
- 7: Steuereinheit
- 8: Reflektor
- 9: Lichtscheibe
- 10: O-Ring

## Patentansprüche

1. Vorrichtung zum Verschweißen von mehreren einen Hohlkörper mit einer Öffnung bildenden thermoplastischen Kunststoffteilen (Fügeteilen) mit einer Einrichtung zum ortsfesten Halten des aus den Fügeteilen zusammengesetzten Hohlkörpers, einer Einrichtung zur Erzeugung einer Kraft, welche die eine Fügezone bildenden Fügeflächen der Fügeteile zusammenpresst und einem Werkzeugkopf, der entlang der Fügezone geführt wird und die zur Verschweißung führende Laserstrahlung in die Fügezone einbringt, **dadurch gekennzeichnet,**
**dass** die Einrichtung zum Halten und die Einrichtung zur Erzeugung einer Kraft ein einziger Vakuumhalter (1) ist, der eine mit einer Vakuumpumpe (4) in Verbindung stehende, einseitig offene Vakuumkammer (2) aufweist, die gemeinsam mit dem Hohlkörper eine geschlossene evakuierbare Kammer bildet.

2. Vorrichtung nach Anspruch 1, **dadurch gekennzeichnet,**
**dass** die offene Seite der Vakuumkammer (2) in Ihrem Querschnitt kleiner als die Öffnung des Hohlkörpers ausgeführt ist und der Hohlkörper über eine die Öffnung bildende Abschlussfläche auf einer die offene Seite der Vakuumkammer (2) umschließenden Abdichtscheibe (3) aufliegt.

3. Vorrichtung nach Anspruch 1, **dadurch gekennzeichnet,**
**dass** die offene Seite der Vakuumkammer (2) in ihrem Querschnitt größer als die Öffnung des Hohlkörpers ist und der Hohlkörper über eine am Umfang des Hohlkörpers befindliche Fläche auf einer die offene Seite der Vakuumkammer (2) umschließenden Abdichtscheibe (3) aufliegt.

4. Vorrichtung nach Anspruch 1, 2 oder 3, **dadurch gekennzeichnet,**
**dass** ein Drucksensor (5) vorhanden ist, mit dem ein Druckabfall in der Vakuumkammer (2) erfasst wird und über eine mit dieser verbundenen signalgebenden Einheit (6) zur Anzeige gebracht wird.

5. Vorrichtung nach Anspruch 4, **dadurch gekennzeichnet,**
**dass** der Drucksensor (5) mit einer der Vakuumpumpe (4) vorgeordneten Steuereinheit (7) verbunden ist und damit ein Regelkreis gebildet wird, um durch ständige Nachreglung des erzeugten Unterdruckes während des Schweißens eine konstante Fügekraft zu gewährleisten.
